# EUROPEAN PATENT APPLICATION

(11) **EP 4 807 953 A1**
(43) Date of publication of application: **16.09.2026**
(21) Application number: 26164000.7
(22) Date of filing: 11.03.2026
(51) Int. Cl.: H02K 5/22, H02K 11/01, H02K 11/02

(54) **POWERTRAIN AND ELECTRIC VEHICLE**

(30) Priority: 12.03.2025 CN 202510294912
(71) Applicant: HUAWEI TECHNOLOGIES CO., LTD., Shenzhen 518129 (CN)
(72) Inventor: DANG, Xuebin, Shenzhen, Guangdong 518129 (CN); GUO, Binxin, Shenzhen, Guangdong 518129 (CN)
(74) Representative: Maiwald GmbH

(57) **Abstract**

This application provides a powertrain and an electric vehicle. A housing of the powertrain includes a motor container and a motor control unit container, and the motor control unit container is configured to accommodate a power module of a motor control unit. The motor control unit container is stacked on an outer side of a circumferential wall of the motor container in a radial direction of a drive motor, and a bottom wall of the motor control unit container is configured to enclose the circumferential wall of the motor container to form a first accommodation part and a second accommodation part. The first accommodation part is configured to accommodate a direct current filter component of the motor control unit, and the second accommodation part is configured to accommodate an alternating current filter component of the motor control unit. The first accommodation part and the second accommodation part are formed by making full use of a space between the motor container and the motor control unit container. The first accommodation part, the motor control unit container, and the second accommodation part are arranged around the outer side of the circumferential wall of the motor container in a circumferential direction of the drive motor, so that the housing has a small size, which facilitates miniaturization of the powertrain. In addition, the first accommodation part and the second accommodation part can provide support for the motor control unit container, making structural strength of the housing stronger.

## Description

### TECHNICAL FIELD

This application relates to the field of electric vehicle technologies, and in particular, to a powertrain and an electric vehicle.

### BACKGROUND

There are a large quantity of electrical components of a motor control unit in a powertrain, and the electrical components of the motor control unit are placed in a motor control unit container, resulting in a large size of the motor control unit container and a large size of the powertrain, which is inconvenient for layout of the powertrain in a vehicle.

### SUMMARY

This application provides a powertrain and an electric vehicle, to reduce a size of the powertrain.

According to a first aspect, this application provides a powertrain. A housing of the powertrain includes a motor container and a motor control unit container, the motor container is configured to: fasten a stator of a drive motor and accommodate a rotor of the drive motor, the motor control unit container is configured to accommodate a power module of a motor control unit, the power module is configured to convert a direct current obtained through filtering by a direct current filter component of the motor control unit into an alternating current, and an alternating current filter component of the motor control unit is configured to: perform filtering on the alternating current, and then transmit a filtered alternating current to a stator winding of the drive motor. The motor control unit container is stacked on an outer side of a circumferential wall of the motor container in a radial direction of the drive motor, and a bottom wall of the motor control unit container is configured to enclose the circumferential wall of the motor container to form a first accommodation part and a second accommodation part. The first accommodation part is configured to accommodate the direct current filter component, and the second accommodation part is configured to accommodate the alternating current filter component. The first accommodation part, the motor control unit container, and the second accommodation part are arranged around the outer side of the circumferential wall of the motor container in a circumferential direction of the drive motor.

In this embodiment of this application, the motor control unit container is stacked on the outer side of the circumferential wall of the motor container in the radial direction of the drive motor, and the bottom wall of the motor control unit container is configured to enclose the circumferential wall of the motor container to form the first accommodation part and the second accommodation part, so that the space between the motor control unit container and the motor container can be fully used to form the first accommodation part and the second accommodation part. This helps reduce the size of the housing of the powertrain. The first accommodation part is used to accommodate the direct current filter component, and the second accommodation part is used to accommodate the alternating current filter component, so that the direct current filter component and the alternating current filter component that are originally arranged in a same motor control unit container may be separately arranged. This helps reduce interference between the alternating current filter component and the direct current filter component, and interference between the alternating current filter component, the direct current filter component, and the power module, thereby improving electromagnetic compatibility. After the direct current filter component and the alternating current filter component of the motor control unit do not need to be arranged in the motor control unit container, a size of the motor control unit container can be further set to be smaller. This further helps reduce an overall size of the powertrain in the radial direction of the drive motor, thereby helping the powertrain adapt to a plurality of arrangement manners.

In this embodiment of this application, the first accommodation part, the motor control unit container, and the second accommodation part are arranged around the outer side of the circumferential wall of the motor container in the circumferential direction of the drive motor, so that the first accommodation part, the motor control unit container, and the second accommodation part can be arranged in a "C" shape on the outer side of the circumferential wall of the motor container. This helps make full use of a space on the outer side of the circumferential wall of the motor container. In addition, the first accommodation part and the second accommodation part do not occupy an excessive space other than the motor control unit container and the motor container, so that a size of the housing in the radial direction of the drive motor is small, thereby helping reduce the size of the powertrain. The first accommodation part, the motor control unit container, and the second accommodation part are arranged around the outer side of the circumferential wall of the motor container in the circumferential direction of the drive motor. This further helps both the first accommodation part and the second accommodation part support the bottom wall of the motor control unit container, so that overall structural strength of the housing can be improved, thereby helping improve stability and reliability of the powertrain and improve NVH performance of the powertrain.

In this embodiment of this application, the motor control unit container is stacked on the outer side of the circumferential wall of the motor container in the radial direction of the drive motor, to make the bottom wall of the motor control unit container enclose the circumferential wall of the motor container to form the first accommodation part and the second accommodation part. The direct current filter component and the alternating current filter component of the motor control unit are respectively arranged in the first accommodation part and the second accommodation part, so that electrical components of the motor control unit can be separately arranged in the first accommodation part, the motor control unit container, and the second accommodation part, which helps improve the NVH performance of the powertrain. Then, the first accommodation part, the motor control unit container, and the second accommodation part are arranged around the outer side of the circumferential wall of the motor container in the circumferential direction of the drive motor, so that formation of the first accommodation part and the second accommodation part can make full use of the space between the motor container and the motor control unit container, and the housing has a small size, which facilitates miniaturization of the powertrain. In addition, the first accommodation part and the second accommodation part can provide support for the motor control unit container, making the structural strength of the housing stronger.

In an embodiment, the motor container, the motor control unit container, the first accommodation part, and the second accommodation part are integrated through injection molding, to improve the structural strength of the housing.

In an embodiment, a reducer of the powertrain is a planetary reducer. In comparison with a parallel shaft reducer, radial lengths of the planetary reducer at various angles in a circumferential direction do not differ greatly. The planetary reducer is roughly in a circular shape, and a length of the planetary reducer in the radial direction of the powertrain is less than that of the parallel shaft reducer. The first accommodation part, the motor control unit container, and the second accommodation part are arranged in the circumferential direction of the drive motor, so that the first accommodation part, the motor control unit container, and the second accommodation part occupy a small length of the powertrain in the radial direction, and therefore, the length of the powertrain in the radial direction of the powertrain is small, which facilitates the miniaturization of the powertrain.

In an embodiment, orientations of an opening of the first accommodation part and an opening of the second accommodation part intersect with an orientation of an opening of the motor control unit container, and the orientation of the opening of the first accommodation part is opposite to the orientation of the opening of the second accommodation part.

In this embodiment of this application, the orientations of the opening of the first accommodation part and the opening of the second accommodation part intersect with the orientation of the opening of the motor control unit container, which further helps allow for a larger volume without additionally increasing the size of the housing in the radial direction after the first accommodation part, the motor control unit container, and the second accommodation part are arranged around the outer side of the circumferential wall of the motor container in the circumferential direction of the drive motor, and therefore, the first accommodation part has a sufficient space to accommodate the direct current filter component, and the second accommodation part has a sufficient space to accommodate the alternating current filter component.

In this embodiment of this application, the orientation of the opening of the first accommodation part is opposite to the orientation of the opening of the second accommodation part, so that the first accommodation part and the second accommodation part can make full use of two triangular spaces formed by the bottom wall of the motor control unit container and the outer side of the circumferential wall of the motor container, and therefore, the first accommodation part and the second accommodation part do not occupy an excessive space of the motor control unit container in a direction perpendicular to an axial direction of the drive motor. This further helps reduce the size of the housing, to obtain the powertrain with a smaller size.

In an embodiment, the first accommodation part and the second accommodation part are enveloped on the bottom wall of the motor control unit container in an arrangement direction of the first accommodation part and the second accommodation part, so that the first accommodation part and the second accommodation part do not extend beyond the bottom wall of the motor control unit container, thereby reducing the size of the powertrain.

In an embodiment, a part of the circumferential wall of the motor container and a part of the bottom wall of the motor control unit container are spaced apart, the part of the circumferential wall of the motor container is configured to form a bottom wall of the first accommodation part, and the part of the bottom wall of the motor control unit container is configured to form a first circumferential side wall of the first accommodation part.

In this embodiment of this application, the part of the circumferential wall of the motor container and the part of the bottom wall of the motor control unit container are spaced apart, so that the first accommodation part can be formed by using a space between the part of the circumferential wall of the motor container and the part of the bottom wall of the motor control unit container without occupying additional spaces of the motor control unit container and the motor container in the axial direction of the drive motor and the radial direction of the drive motor, and therefore, the size of the housing is small.

In this embodiment of this application, the part of the circumferential wall of the motor container is configured to form the bottom wall of the first accommodation part, and the part of the bottom wall of the motor control unit container is configured to form the first circumferential side wall of the first accommodation part, so that the bottom wall and the first circumferential side wall of the first accommodation part can be formed by directly reusing the part of the circumferential wall of the motor container and the part of the bottom wall of the motor control unit container, and therefore, structural integration between the first accommodation part, and the motor control unit container and the motor container is higher. This facilitates higher integration of the housing, and also helps make a structure of the powertrain more compact, thereby helping reduce the size of the powertrain and improve the structural strength of the housing.

In this embodiment of this application, the part of the bottom wall of the motor control unit container is configured to form the first circumferential side wall of the first accommodation part, so that the first accommodation part can further provide support for the motor control unit container. This helps reduce a shake mode of the motor control unit and improve the NVH performance of the powertrain.

In an embodiment, the first circumferential side wall includes a high-voltage terminal mounting hole, the first accommodation part and the motor control unit container communicate through the high-voltage terminal mounting hole, the high-voltage terminal mounting hole is used for a high-voltage terminal wiring component to pass through, and the high-voltage terminal wiring component is configured to transmit the direct current obtained through filtering by the direct current filter component to the power module.

In this embodiment of this application, the first circumferential side wall includes the high-voltage terminal mounting hole, the first accommodation part and the motor control unit container communicate through the high-voltage terminal mounting hole, and the high-voltage terminal mounting hole is used for the high-voltage terminal wiring component to pass through. The first accommodation part is configured to accommodate the direct current filter component, the motor control unit container is configured to accommodate the power module of the motor control unit, and the part of the bottom wall of the motor control unit container is configured to form the first circumferential side wall of the first accommodation part. The high-voltage terminal mounting hole and the high-voltage terminal wiring component are arranged on the first circumferential side wall shared by the first accommodation part and the motor control unit container, so that the direct current obtained through filtering by the direct current filter component can be quickly transmitted to the power module through a short path. This helps reduce a power loss, and further helps simplify cable arrangement.

In an embodiment, the housing includes a first protrusion, the first protrusion protrudes from an outer circumferential wall of the motor container, the first protrusion is arranged opposite to the part of the bottom wall of the motor control unit container in the circumferential direction of the drive motor, and the first protrusion is configured to form a second circumferential side wall of the first accommodation part.

In this embodiment of this application, the first protrusion protrudes from the outer circumferential wall of the motor container, the first protrusion is arranged opposite to the part of the bottom wall of the motor control unit container in the circumferential direction of the drive motor, and the first protrusion is configured to form the second circumferential side wall of the first accommodation part. The first protrusion is formed by using the outer circumferential wall of the motor container, to form the second circumferential side wall, so that the first accommodation part does not occupy an excessive space of the housing, thereby helping reduce the size of the housing.

In this embodiment of this application, the first protrusion protrudes from the outer circumferential wall of the motor container, so that structural stability of the housing and the powertrain can be further enhanced, thereby helping improve the NVH performance of the powertrain.

In an embodiment, the second circumferential side wall includes a direct current mounting hole, and the direct current mounting hole is used for a high-voltage connector to pass through. The high-voltage connector is configured to connect the power module to a power battery, and the direct current filter component is configured to perform filtering on a direct current transmitted by the high-voltage connector.

In this embodiment of this application, the second circumferential side wall includes the direct current mounting hole, the direct current mounting hole is used for the high-voltage connector to pass through, the high-voltage connector is configured to connect the power module to the power battery, the direct current filter component is configured to perform filtering on the direct current transmitted by the high-voltage connector, and the second circumferential side wall is arranged opposite to the first circumferential side wall in the circumferential direction of the drive motor, so that a high-voltage direct current that is output by the power battery can be transmitted to the power module through the high-voltage connector, the direct current filter component, and the high-voltage terminal wiring component in the circumferential direction of the drive motor, and the direct current can be transmitted more smoothly through a shorter path. In addition, a structure of the powertrain is arranged more compactly in the circumferential direction of the drive motor, and further, arrangement of the high-voltage connector does not occupy an additional space of the housing in the axial direction of the drive motor. This helps the powertrain have a small size.

In this embodiment of this application, the high-voltage connector is arranged on the second circumferential side wall, the high-voltage terminal wiring component is arranged on the first circumferential side wall, and the second circumferential side wall is arranged opposite to the first circumferential side wall, so that the high-voltage connector is arranged opposite to the high-voltage terminal wiring component, thereby reducing interference between the high-voltage connector and the high-voltage terminal wiring component, and improving EMC performance of the powertrain.

In an embodiment, the first accommodation part is further configured to accommodate a central control board, the first circumferential side wall includes a board connection hole, the motor control unit container and the first accommodation part communicate through the board connection hole, the board connection hole is used for a board connector to pass through, and the board connector is configured to connect the central control board to a circuit board of the motor control unit.

In this embodiment of this application, the first accommodation part is further configured to accommodate the central control board. The first accommodation part is reused to accommodate the central control board, so that components are arranged compactly. In addition, the central control board in the first accommodation part can be electrically isolated from the circuit board and the power module in the motor control unit container. This helps improve the EMC performance of the powertrain.

In this embodiment of this application, the part of the bottom wall of the motor control unit container is configured to form the first circumferential side wall of the first accommodation part, the first circumferential side wall includes the board connection hole, the motor control unit container and the first accommodation part communicate through the board connection hole, the board connection hole is used for the board connector to pass through, the board connector is configured to connect the central control board to the circuit board of the motor control unit, the central control board is accommodated in the first accommodation part, and the circuit board is accommodated in the motor control unit container, so that the central control board can smoothly transmit a signal to the circuit board of the motor control unit through the board connector in the circumferential direction of the drive motor, and further regulate a running status of the drive motor through the circuit board.

In this embodiment of this application, the board connection hole and the board connector are arranged on the first circumferential side wall shared by the first accommodation part and the motor control unit container, so that a connection path between the central control board and the circuit board of the motor control unit can be shorter, thereby simplifying the cable arrangement.

In an embodiment, the powertrain includes two drive motors, and one central control board may be used to separately control running statuses of the two drive motors through one or two circuit boards of the motor control unit, so that motion statuses of wheels of a vehicle can be regulated.

In an embodiment, the central control board is further configured to control a door system of the vehicle, and is configured to: monitor a status (for example, open, closed, or locked) of a vehicle door, and control an action, for example, unlocking, locking, opening, or closing, of the vehicle door. In an embodiment, the central control board may further manage a function related to the vehicle door, for example, a vehicle window, a rear-view mirror, or a sunroof. In this embodiment of this application, the first accommodation part is reused to accommodate the central control board that has a plurality of control functions, so that the size of the powertrain is small while the powertrain implements control of a plurality of functions.

In an embodiment, the housing further includes a shielding wall, the shielding wall protrudes from an outer side wall of the motor container, the shielding wall is configured to divide the first accommodation part into a board container and a direct current filter component container, the board container is configured to accommodate the central control board, and the direct current filter component container is configured to accommodate the direct current filter component.

In this embodiment of this application, the housing further includes the shielding wall, the shielding wall protrudes from the outer side wall of the motor container, and the shielding wall may enhance structural strength of the first accommodation part.

In this embodiment of this application, the shielding wall is configured to divide the first accommodation part into a board container and a direct current filter component container, the board container is configured to accommodate the central control board, and the direct current filter component container is configured to accommodate the direct current filter component, so that the shielding wall can electrically isolate the central control board from the direct current filter component, thereby improving the EMC performance of the powertrain.

In an embodiment, the direct current filter component container is further configured to accommodate a direct current breaker. When the powertrain is faulty in one of different arrangement states in the vehicle, the direct current breaker may disconnect a direct current circuit, to avoid burning. This helps improve safety of the powertrain.

In an embodiment, the second circumferential side wall further includes a signal mounting hole, and the signal mounting hole is configured to fasten a signal connector for transmitting a signal to the central control board.

In this embodiment of this application, the second circumferential side wall further includes the signal mounting hole, and the signal mounting hole is configured to fasten the signal connector for transmitting the signal to the central control board, so that the signal connector can transmit the signal to the central control board in the first accommodation part, and therefore, the central control board can transmit the signal to the circuit board of the motor control unit.

In an embodiment, the housing further includes a first shielding wall, the first shielding wall protrudes from the outer side wall of the motor container, and the first shielding wall is distributed on the bottom wall of the first accommodation part. The signal mounting hole and the board connection hole are arranged on two sides of the first shielding wall in the axial direction of the drive motor.

In this embodiment of this application, the housing further includes the first shielding wall, the first shielding wall protrudes from the outer side wall of the motor container, and the first shielding wall is distributed on the bottom wall of the first accommodation part. The first shielding wall may enhance the structural strength of the first accommodation part.

In this embodiment of this application, the signal mounting hole and the board connection hole are arranged on the two sides of the first shielding wall in the axial direction of the drive motor, so that the first shielding wall can electrically isolate the board connector mounted in the board connection hole from the signal connector mounted in the signal mounting hole, thereby improving the EMC performance.

In an embodiment, the housing further includes a second shielding wall, and the second shielding wall protrudes from the part of the bottom wall of the motor control unit container to the opening of the motor control unit container. The board connection hole and the high-voltage terminal mounting hole are arranged on two sides of the second shielding wall in the circumferential direction of the drive motor.

In this embodiment of this application, the board connection hole and the high-voltage terminal mounting hole are arranged on the two sides of the second shielding wall in the circumferential direction of the drive motor, so that the second shielding wall can electrically isolate the board connector from the high-voltage terminal wiring component, thereby preventing a high-voltage direct current transmitted by the high-voltage terminal wiring component from interfering with an electrical signal of the central control board. This helps improve the EMC performance of the powertrain.

In an embodiment, the motor control unit container is further configured to accommodate a direct current transfer copper busbar, the direct current transfer copper busbar is configured to connect to the high-voltage terminal wiring component, and the direct current transfer copper busbar is configured to connect to a bus capacitor of the motor control unit, so that the direct current that is output by the power battery can be transmitted to the bus capacitor of the motor control unit. The board connection hole and the direct current transfer copper busbar are arranged on the two sides of the second shielding wall in the circumferential direction of the drive motor, and the board connection hole is configured to fasten the board connector, so that the electrical signal transmitted by the central control board is not affected by interference of the direct current transfer copper busbar. This helps improve electromagnetic compatibility of the powertrain.

In an embodiment, the bus capacitor, the power module, and the circuit board of the motor control unit are stacked, to reduce a space occupied by the motor control unit and reduce the size of the powertrain.

In an embodiment, the first accommodation part is further configured to fasten a shielding cover, and the shielding cover is configured to cover the signal connector, to reduce interference of the signal connector from another power flow or signal.

In an embodiment, another part of the circumferential wall of the motor container and another part of the bottom wall of the motor control unit container are spaced apart, the another part of the circumferential wall of the motor container is configured to form a bottom wall of the second accommodation part, and the another part of the bottom wall of the motor control unit container is configured to form a third circumferential side wall of the second accommodation part.

In this embodiment of this application, the another part of the circumferential wall of the motor container and the another part of the bottom wall of the motor control unit container are spaced apart, so that the second accommodation part can be formed by using the another part of the circumferential wall of the motor container and the another part of the bottom wall of the motor control unit container without occupying additional spaces of the motor control unit container and the motor container in the axial direction of the drive motor and the direction perpendicular to the axial direction of the drive motor, and the size of the housing is small, thereby helping reduce the size of the powertrain.

In this embodiment of this application, the another part of the circumferential wall of the motor container is configured to form the bottom wall of the second accommodation part, and the another part of the bottom wall of the motor control unit container is configured to form the third circumferential side wall of the second accommodation part, so that the bottom wall and the third circumferential side wall of the second accommodation part can be formed by directly reusing the another part of the circumferential wall of the motor container and the another part of the bottom wall of the motor control unit container, and therefore, structural integration between the motor control unit container, the motor container, and the second accommodation part is higher. This facilitates higher integration of the housing, and also helps make the structure of the powertrain more compact, thereby helping reduce the size of the powertrain.

In this embodiment of this application, the another part of the bottom wall of the motor control unit container is configured to form the third circumferential side wall of the second accommodation part, so that the second accommodation part can provide support for the motor control unit container. This helps reduce the shake mode of the motor control unit and improve the NVH performance of the powertrain.

In an embodiment, the third circumferential side wall includes a three-phase hole, and the second accommodation part and the motor control unit container communicate through the three-phase hole. The three-phase hole is used for a three-phase copper busbar to pass through, and the three-phase copper busbar is configured to connect the power module of the motor control unit to the stator winding.

In this embodiment of this application, the third circumferential side wall includes the three-phase hole, the second accommodation part and the motor control unit container communicate through the three-phase hole, the three-phase hole is used for the three-phase copper busbar to pass through, the motor control unit container is configured to accommodate the power module of the motor control unit, the second accommodation part is configured to accommodate the alternating current filter component, and the alternating current filter component of the motor control unit is configured to: perform filtering on the alternating current, and then transmit the filtered alternating current to the stator winding of the drive motor, so that the three-phase copper busbar can be connected to the alternating current filter component in the second accommodation part through a shorter path, and therefore, a connection path between the three-phase copper busbar and the stator winding is shorter, and wiring layout is compact, thereby improving structural compactness of the powertrain.

In this embodiment of this application, the three-phase copper busbar is configured to connect the power module of motor control unit to the stator winding, and the three-phase copper busbar may transmit, to the stator winding, the alternating current that is output by the power module, so that the drive motor runs.

In an embodiment, the housing further includes a third shielding wall. The third shielding wall protrudes from the another part of the bottom wall of the motor control unit container to the opening of the motor control unit container, the another part of the bottom wall of the motor control unit container includes a fastening hole and the three-phase hole, the fastening hole is configured to fasten the power module, and the three-phase hole and the fastening hole are arranged on two sides of the third shielding wall in an arrangement direction of the part of the bottom wall of the motor control unit container and the another part of the bottom wall of the motor control unit container.

In this embodiment of this application, the three-phase hole and the fastening hole are arranged on the two sides of the third shielding wall in the arrangement direction of the part of the bottom wall of the motor control unit container and the another part of the bottom wall of the motor control unit container, so that the three-phase copper busbar fastened by the three-phase hole is electrically isolated from the power module fastened by the fastening hole. This helps avoid EMC interference between the three-phase copper busbar and the power module.

In an embodiment, the third circumferential side wall further includes a signal hole, the second accommodation part and the motor control unit container communicate through the signal hole, the signal hole is used for a signal cable to pass through, and the signal cable is configured to connect the circuit board of the motor control unit to a resolver.

In this embodiment of this application, the third circumferential side wall further includes the signal hole, the second accommodation part and the motor control unit container communicate through the signal hole, and the signal hole is used for the signal cable to pass through, so that both the signal cable and the three-phase copper busbar can be arranged on the third circumferential side wall, and therefore, wiring of the powertrain is compact. This helps improve integration of the powertrain and reduce the size of the powertrain.

In this embodiment of this application, the signal cable is configured to connect the circuit board of the motor control unit to the resolver, and the resolver may be configured to detect rotational speed information of the rotor of the drive motor, so that the rotational speed information of the rotor can be transmitted to the circuit board of the motor control unit through the signal cable, and therefore, a rotation status of the rotor of the drive motor can be adjusted and controlled through the circuit board.

In an embodiment, the housing further includes a second protrusion, the second protrusion protrudes from the outer side wall of the motor container, the second protrusion includes a first segment, a second segment, and a third segment that are sequentially connected, the first segment is opposite to the third segment in the axial direction of the drive motor, the second segment is opposite to the another part of the bottom wall of the motor control unit container in the circumferential direction of the drive motor, the second segment is configured to form a fourth circumferential side wall of the second accommodation part, and the first segment and the third segment respectively form a third axial side wall and a fourth axial side wall of the second accommodation part.

In this embodiment of this application, the housing further includes the second protrusion, the second protrusion protrudes from the outer side wall of the motor container, and the second protrusion is formed by using the outer side wall of the motor container. This helps prevent the second protrusion from occupying excessive spaces of the motor container and the motor control unit container in the direction perpendicular to the axial direction of the drive motor, and helps reduce the size of the housing, thereby helping reduce the size of the powertrain. The second protrusion may further enhance the structural strength of the housing.

In this embodiment of this application, the third circumferential side wall and the first segment, the second segment, and the third segment of the second protrusion jointly form a circumferential wall of the second accommodation part, so that structural strength of the second accommodation part is stronger, and the structural strength of the housing is also stronger. This helps improve the NVH performance of the powertrain.

In an embodiment, the third axial side wall is closer to an opening of the motor container than the fourth axial side wall, the third axial side wall includes a cable outlet, the cable outlet runs through the third axial side wall in the axial direction of the drive motor, and the cable outlet is configured to accommodate the power module and a three-phase connection component of the stator winding of the drive motor.

In this embodiment of this application, the third axial side wall is closer to the opening of the motor container than the fourth axial side wall, the stator winding is arranged in the motor container, the third axial side wall includes the cable outlet, the cable outlet runs through the third axial side wall in the axial direction of the drive motor, and the cable outlet is configured to accommodate the power module and the three-phase connection component of the stator winding of the drive motor, so that an electrical connection path between the power module and the stator winding is shorter, and therefore, wiring layout of the three-phase connection component and the alternating current filter component is more compact. This helps reduce the size of the powertrain.

In an embodiment, the second accommodation part is further configured to accommodate an alternating current filter magnetic ring, and a part that is of the three-phase copper busbar and that extends into the second accommodation part is further configured to pass through the alternating current filter magnetic ring, so that filtering can be performed, through the alternating current filter magnetic ring, on a three-phase alternating current received by the three-phase copper busbar from the power module. This helps transmit the more stable three-phase alternating current to the stator winding, to drive the rotor to rotate.

In an embodiment, the second accommodation part is further configured to communicate with the motor container to receive oil in the motor container. The housing further includes an oil return hole, and the second accommodation part and the motor container communicate through the oil return hole.

In this embodiment of this application, the second accommodation part is further configured to communicate with the motor container to receive the oil in the motor container, and the second accommodation part is reused as an oil bottom housing, so that there is no need to additionally dispose an oil bottom housing for oil storage. This helps the powertrain have a compact and small structure. When the second accommodation part is used as the oil bottom housing to accommodate the oil, the alternating current filter component fastened in the second accommodation part may be soaked by the oil, which facilitates heat dissipation of the alternating current filter component. In addition, a radiation noise of a cover plate of the second accommodation part may be reduced based on an adhesiveness feature of the oil, so that the NVH performance of the powertrain is improved.

In this embodiment of this application, the housing further includes the oil return hole, and the second accommodation part and the motor container communicate through the oil return hole, so that the oil in the motor container can quickly return to the second accommodation part through the oil return hole. This helps accelerate circulation of the oil and improve cooling and lubrication efficiency of the powertrain.

In an embodiment, the housing includes two motor containers, orientations of openings of the two motor containers are opposite to each other in the axial direction of the drive motor, and the motor control unit container is stacked on outer sides of circumferential walls of the two motor containers in the radial direction of the drive motor. The motor control unit container is configured to accommodate two power modules of the motor control unit, the two power modules are configured to electrically connect to the direct current filter component to receive a direct current, and each power module is configured to transmit a three-phase alternating current to the stator of the drive motor in the two motor containers.

In this embodiment of this application, the orientations of the openings of the two motor containers are opposite to each other in the axial direction of the drive motor, which helps the stator and the rotor of the drive motor be respectively mounted in the housing of the powertrain from directions of the openings of the two motor containers in the axial direction of the drive motor.

In this embodiment of this application, the motor control unit container is stacked on the outer sides of the circumferential walls of the two motor containers in the radial direction of the drive motor. This helps form the first accommodation part and the second accommodation part with large sizes, so that a large quantity of electrical components of the motor control unit can be arranged in the first accommodation part and the second accommodation part.

In this embodiment of this application, the motor control unit container is configured to accommodate two power modules of the motor control unit. The two power modules are configured to electrically connect to the direct current filter component to receive a direct current. Each power module is configured to transmit a three-phase alternating current to the stator of the drive motor in the two motor containers, so that one direct current filter component in the first accommodation part can be used to simultaneously perform filtering on direct currents that are input to the two power modules. This helps improve the integration of the powertrain, and further helps reduce use of electrical components, thereby facilitating the miniaturization of the powertrain.

In an embodiment, when the second accommodation part is formed by the circumferential walls of the two motor containers, a third axial side wall and a fourth axial side wall of the second accommodation part each include a cable outlet, and the cable outlet is configured to accommodate the power module and the three-phase connection component of the stator winding of the drive motor.

According to a second aspect, this application provides an electric vehicle. The electric vehicle includes a vehicle frame and the powertrain according to the first aspect, the vehicle frame is configured to fasten the powertrain, the motor control unit is configured to receive power supplied by a power battery, and the drive motor is configured to receive power supplied by the motor control unit to drive a wheel.

According to the powertrain in this embodiment of this application, the motor control unit container is stacked on the outer side of the circumferential wall of the motor container in the radial direction of the drive motor, to make the bottom wall of the motor control unit container enclose the circumferential wall of the motor container to form the first accommodation part and the second accommodation part. The direct current filter component and the alternating current filter component are respectively arranged in the first accommodation part and the second accommodation part, so that electrical components of the motor control unit can be separately arranged in three parts(the first accommodation part, the motor control unit container, and the second accommodation part). Then, the first accommodation part, the motor control unit container, and the second accommodation part are arranged around the outer side of the circumferential wall of the motor container in the circumferential direction of the drive motor, so that the formation of the first accommodation part and the second accommodation part can make full use of a space between the motor container and the motor control unit container, and the housing has a small size, which facilitates the miniaturization of the powertrain. In addition, the first accommodation part and the second accommodation part can provide support for the motor control unit container, making the structural strength of the housing stronger and optimizing vehicle performance.

### BRIEF DESCRIPTION OF DRAWINGS

To describe technical solutions in embodiments of this application more clearly, the following describes accompanying drawings used in embodiments of this application.
FIG. 1 is a diagram of an electric vehicle according to an embodiment of this application;
FIG. 2 is a diagram of a powertrain according to an embodiment of this application;
FIG. 3 is another diagram of a powertrain according to an embodiment of this application;
FIG. 4 is another diagram of a powertrain according to an embodiment of this application;
FIG. 5 is another diagram of a powertrain according to an embodiment of this application;
FIG. 6 is another diagram of a powertrain according to an embodiment of this application;
FIG. 7 is a diagram of a housing according to an embodiment of this application;
FIG. 8 is another diagram of a housing according to an embodiment of this application; and
FIG. 9 is another diagram of a housing according to an embodiment of this application.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

For ease of understanding, the following first describes English abbreviations and related technical terms used in embodiments of this application.

EMC: The EMC is short for electromagnetic compatibility, and is referred to as an electromagnetic compatibility in Chinese. The EMC refers to a capability of a device or a system to run as required in an electromagnetic environment of the device or the system without causing intolerable electromagnetic interference to any device in the environment of the device or the system.

NVH: The NVH is short for noise, vibration, and harshness, and refers to noise, vibration, and harshness.

This application provides a powertrain. A housing of the powertrain includes a motor container and a motor control unit container, the motor container is configured to: fasten a stator of a drive motor and accommodate a rotor of the drive motor, the motor control unit container is configured to accommodate a power module of a motor control unit, the power module is configured to convert a direct current obtained through filtering by a direct current filter component of the motor control unit into an alternating current, and an alternating current filter component of the motor control unit is configured to: perform filtering on the alternating current, and then transmit a filtered alternating current to a stator winding of the drive motor. The motor control unit container is stacked on an outer side of a circumferential wall of the motor container in a radial direction of the drive motor, and a bottom wall of the motor control unit container is configured to enclose the circumferential wall of the motor container to form a first accommodation part and a second accommodation part. The first accommodation part is configured to accommodate the direct current filter component, and the second accommodation part is configured to accommodate the alternating current filter component. The first accommodation part, the motor control unit container, and the second accommodation part are arranged around the outer side of the circumferential wall of the motor container in a circumferential direction of the drive motor.

The motor control unit container is stacked on the outer side of the circumferential wall of the motor container in the radial direction of the drive motor, to make the bottom wall of the motor control unit container enclose the circumferential wall of the motor container to form the first accommodation part and the second accommodation part. The direct current filter component and the alternating current filter component are respectively arranged in the first accommodation part and the second accommodation part, so that electrical components of the motor control unit can be separately arranged in three parts(the first accommodation part, the motor control unit container, and the second accommodation part). Then, the first accommodation part, the motor control unit container, and the second accommodation part are arranged around the outer side of the circumferential wall of the motor container in the circumferential direction of the drive motor, so that formation of the first accommodation part and the second accommodation part can make full use of a space between the motor container and the motor control unit container, and the housing has a small size, which facilitates miniaturization of the powertrain. In addition, the first accommodation part and the second accommodation part can provide support for the motor control unit container, making structural strength of the housing stronger.

This application provides a powertrain, and the powertrain is used in an electric vehicle.

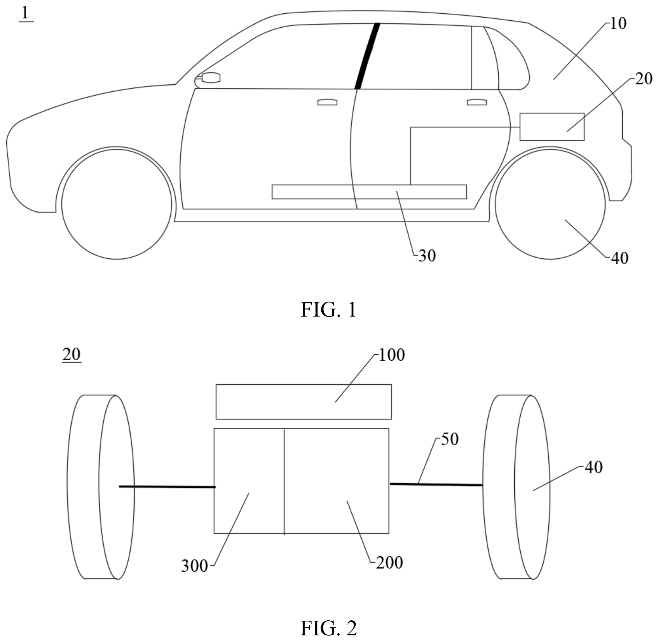

FIG. 1 is a diagram of an electric vehicle 1 according to an embodiment of this application.

In an embodiment, the electric vehicle 1 includes a vehicle frame 10, a powertrain 20, and a power battery 30. As shown in FIG. 1, the vehicle frame 10 is configured to fasten the powertrain 20 and the power battery 30. In this embodiment of this application, the electric vehicle 1 is a wheeled device driven or pulled by a power apparatus. In this embodiment of this application, the powertrain 20 is configured to receive power supplied by the power battery 30 to drive a wheel 40.

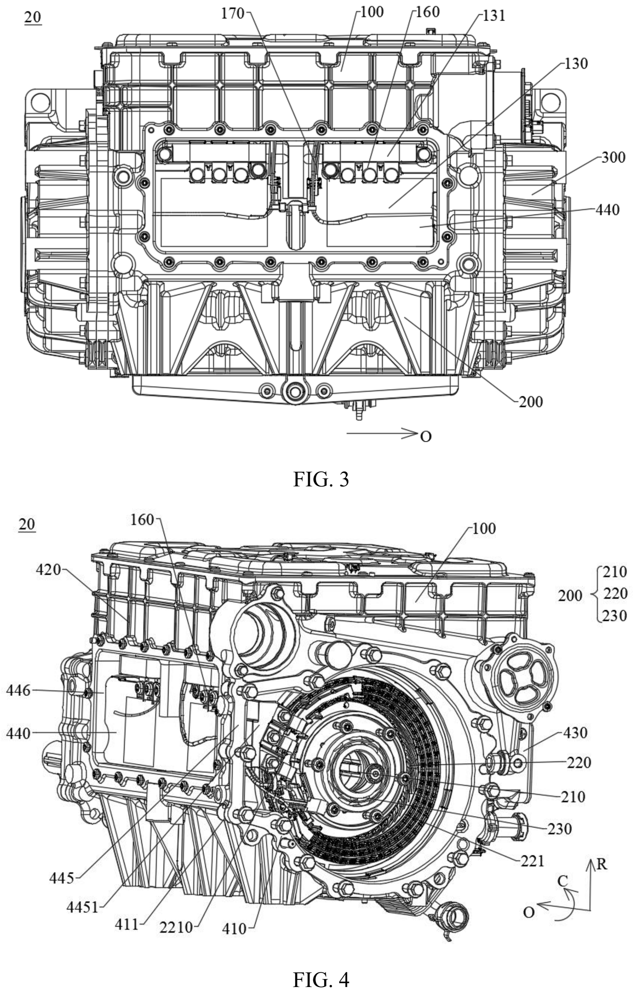

FIG. 2 is a diagram of a powertrain 20 according to an embodiment of this application. FIG. 3 is another diagram of a powertrain 20 according to an embodiment of this application. FIG. 4 is another diagram of a powertrain 20 according to an embodiment of this application.

In an embodiment, as shown in FIG. 2 to FIG. 4, the powertrain 20 includes a motor control unit 100, a drive motor 200, and a planetary reducer 300.

In this embodiment of this application, the drive motor 200 includes a motor shaft 210, a stator 220, and a rotor 230, and the planetary reducer 300 includes a planetary gear assembly. The motor control unit 100 is configured to receive power supplied by the power battery 30. The rotor 230 of the drive motor 200 is fastened to and sleeved on the motor shaft 210. After receiving a current provided by the motor control unit 100, the stator 220 drives the rotor 230 to rotate, to drive the motor shaft 210 to rotate. The motor shaft 210 of the drive motor 200 is configured to: transmit kinetic energy to the planetary gear assembly of the planetary reducer 300, and transmit power to the wheel 40 through a half shaft 50, to drive the wheel 40 to move. The planetary gear assembly of the planetary reducer 300 includes a sun gear, a planet gear, a planet carrier, and a ring gear.

The motor shaft 210 in FIG. 4 merely indicates a schematic position of the motor shaft 210, and does not indicate a specific structure.

In this embodiment of this application, the motor control unit 100 is configured to: receive a high-voltage direct current transmitted by the power battery 30, convert the high-voltage direct current into a high-voltage alternating current, and transmit the high-voltage alternating current to the drive motor 200, so that the drive motor 200 runs.

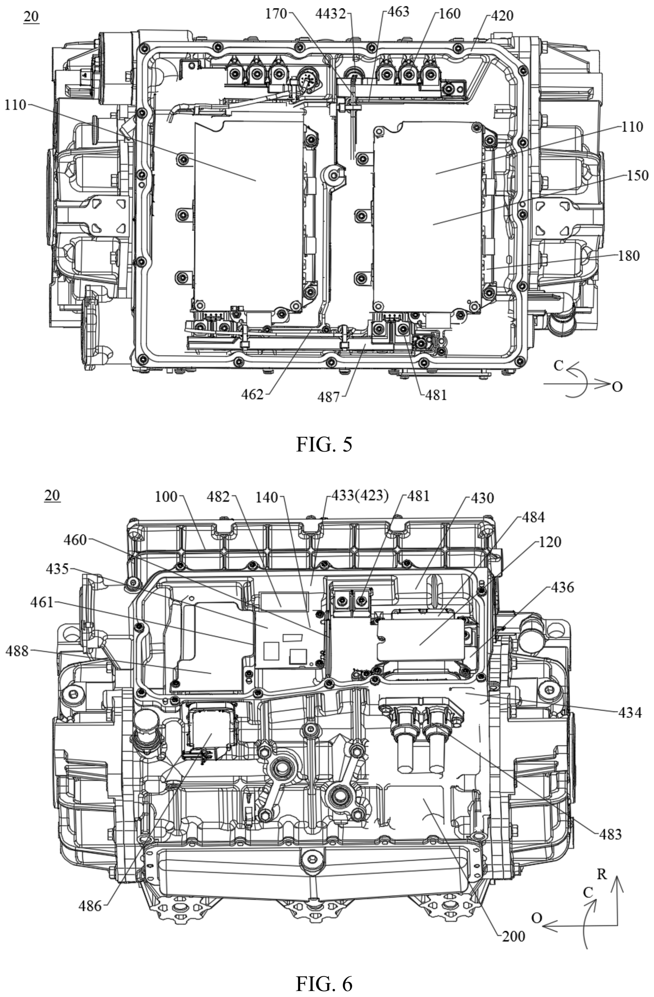

FIG. 5 is another diagram of a powertrain 20 according to an embodiment of this application. FIG. 6 is another diagram of a powertrain 20 according to an embodiment of this application.

In an embodiment, as shown in FIG. 3, FIG. 5, and FIG. 6, the motor control unit 100 includes a power module 110, a direct current filter component 120, and an alternating current filter component 130. The power module 110 is configured to convert a direct current obtained through filtering by the direct current filter component 120 of the motor control unit 100 into an alternating current. The alternating current filter component 130 of the motor control unit 100 is configured to: perform filtering on the alternating current, and then transmit a filtered alternating current to a stator winding 221 of the drive motor 200. The direct current filter component 120 is configured to: filter harmonic interference, common-mode interference, and differential-mode interference in the high-voltage direct current that is output by the power battery 30, and stabilize the current and a voltage, to improve electromagnetic compatibility of the motor control unit 100. The power module 110 receives a high-voltage direct current that is output by the direct current filter component 120, and the power module 110 is configured to convert the high-voltage direct current into a three-phase alternating current. The power module 110 transmits the three-phase alternating current to the alternating current filter component 130 for filtering, and then transmits a filtered three-phase alternating current to the drive motor 200. The three-phase alternating current obtained through filtering by the alternating current filter component 130 enables the drive motor 200 to run stably. The direct current filter component 120 includes at least one of a magnetic ring and a capacitor, and another device that can implement filtering. The alternating current filter component 130 includes at least one of a magnetic ring and a capacitor, and another device that can implement filtering.

In an embodiment, as shown in FIG. 2 to FIG. 4, the powertrain 20 includes two drive motors 200 and two planetary reducers 300, and the two planetary reducers 300 are respectively arranged on two sides of the two drive motors 200 in an axial direction O of the powertrain 20. A stator 220 of each drive motor 200 is configured to: receive a current from the power battery 30 through the motor control unit 100 to make a rotor 230 of the drive motor 200 to rotate, and transmit power to one planetary reducer 300 through the motor shaft 210 to drive a wheel 40 on a side of the electric vehicle 1 to move. Operation of wheels 40 on two sides of the electric vehicle 1 are respectively controlled through the two drive motors 200 and the two planetary reducers 300.

There are a large quantity of electrical components of the motor control unit in the powertrain, and the electrical components of the motor control unit are all placed in the motor control unit container, resulting in a large size of the motor control unit container and a large size of the housing of the powertrain. As a result, a size of the powertrain in a radial direction is large, which is inconvenient for layout of the powertrain in a vehicle.

In this embodiment of this application, the motor control unit container is stacked on the motor container in a radial direction of the drive motor, a space between the motor control unit container and the motor container is used to form a first accommodation part and a second accommodation part, the direct current filter component is arranged in the first accommodation part, and the alternating current filter component is arranged in the second accommodation part. The electrical components of the motor control unit are separately arranged in three parts(the first accommodation part, the motor control unit container, and the second accommodation part), and the first accommodation part, the motor control unit container, and the second accommodation part are arranged around a circumferential wall of the motor container in a circumferential direction of the drive motor, so that the housing has a small size. In addition, the first accommodation part and the second accommodation part can provide support for the motor control unit container, enhancing structural strength of the powertrain.

The following describes in detail the powertrain 20 provided in embodiments of this application.

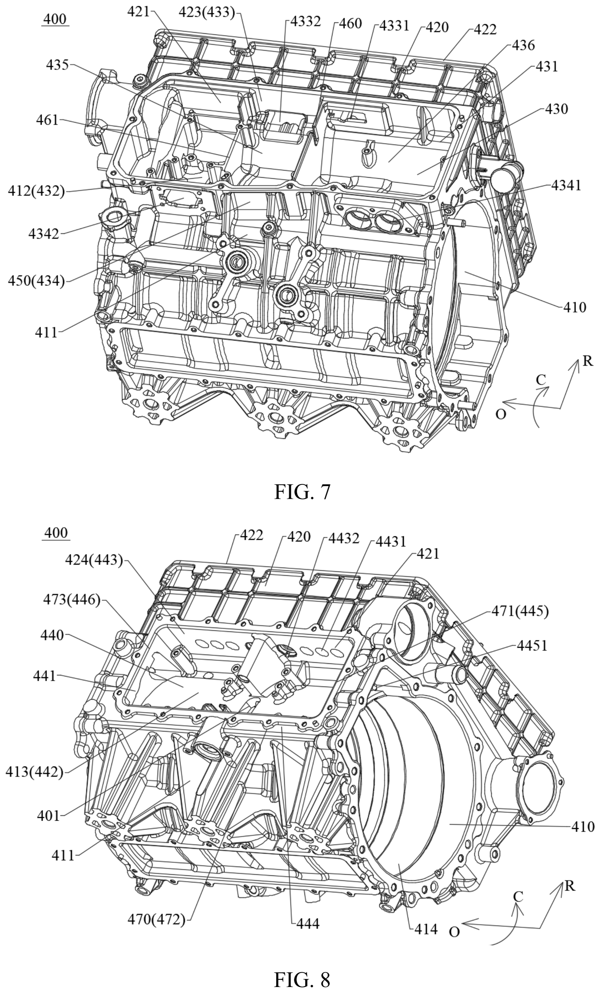

FIG. 7 is a diagram of a housing 400 according to an embodiment of this application. FIG. 8 is another diagram of a housing 400 according to an embodiment of this application.

In an embodiment, as shown in FIG. 4 and FIG. 7, the housing 400 of the powertrain 20 includes the motor container 410 and the motor control unit container 420, and the motor container 410 is configured to: fasten the stator 220 of the drive motor 200 and accommodate the rotor 230 of the drive motor 200. As shown in FIG. 5, the motor control unit container 420 is configured to accommodate the power module 110 of the motor control unit 100. As shown in FIG. 3 to FIG. 6, the power module 110 is configured to convert the direct current obtained through filtering by the direct current filter component 120 of the motor control unit 100 into the alternating current, and the alternating current filter component 130 of the motor control unit 100 is configured to: perform filtering on the alternating current, and then transmit the filtered alternating current to the stator winding 221 of the drive motor 200.

In this embodiment of this application, the power module 110 is configured to convert the direct current obtained through filtering by the direct current filter component 120 of the motor control unit 100 into the alternating current, and the alternating current filter component 130 of the motor control unit 100 is configured to: perform filtering on the alternating current, and then transmit the filtered alternating current to the stator winding 221 of the drive motor 200. This allows a current transmitted from the power battery 30 to the stator winding 221 to be filtered twice, which is more conducive for the stator winding 221 obtaining a stable current signal. After receiving the alternating current, the stator winding 221 drives the rotor 230 to rotate stably.

As shown in FIG. 7 and FIG. 8, the motor control unit container 420 is stacked on an outer side of the circumferential wall 411 of the motor container 410 in the radial direction R of the drive motor 200, and a bottom wall 421 of the motor control unit container 420 is configured to enclose the circumferential wall 411 of the motor container 410 to form the first accommodation part 430 and the second accommodation part 440. As shown in FIG. 6 and FIG. 7, the first accommodation part 430 is configured to accommodate the direct current filter component 120. As shown in FIG. 3 and FIG. 8, the second accommodation part 440 is configured to accommodate the alternating current filter component 130. As shown in FIG. 4, the first accommodation part 430, the motor control unit container 420, and the second accommodation part 440 are arranged around the outer side of the circumferential wall 411 of the motor container 410 in the circumferential direction C of the drive motor 200.

In this embodiment of this application, the motor control unit container 420 is stacked on the outer side of the circumferential wall 411 of the motor container 410 in the radial direction R of the drive motor 200, and the bottom wall 421 of the motor control unit container 420 is configured to enclose the circumferential wall 411 of the motor container 410 to form the first accommodation part 430 and the second accommodation part 440, so that the space between the motor control unit container 420 and the motor container 410 can be fully used to form the first accommodation part 430 and the second accommodation part 440. This helps reduce the size of the housing 400 of the powertrain 20. The first accommodation part 430 is used to accommodate the direct current filter component 120, and the second accommodation part 440 is used to accommodate the alternating current filter component 130, so that the direct current filter component 120 and the alternating current filter component 130 that are originally arranged in a same motor control unit container 420 can be separately arranged. This helps reduce interference between the alternating current filter component 130 and the direct current filter component 120, and interference between the alternating current filter component 130, the direct current filter component 120, and the power module 110, thereby improving electromagnetic compatibility. After the direct current filter component 120 and the alternating current filter component 130 of the motor control unit 100 do not need to be arranged in the motor control unit container 420, the size of the motor control unit container 420 can be further set to be smaller. This further helps reduce the overall size of the powertrain 20 in the radial direction R of the drive motor 200, thereby helping the powertrain 20 adapt to a plurality of arrangement manners.

In this embodiment of this application, the first accommodation part 430, the motor control unit container 420, and the second accommodation part 440 are arranged around the outer side of the circumferential wall 411 of the motor container 410 in the circumferential direction C of the drive motor 200, so that the first accommodation part 430, the motor control unit container 420, and the second accommodation part 440 can be arranged in a "C" shape on the outer side of the circumferential wall 411 of the motor container 410. This helps make full use of a space on the outer side of the circumferential wall 411 of the motor container 410. In addition, the first accommodation part 430 and the second accommodation part 440 do not occupy an excessive space other than the motor control unit container 420 and the motor container 410, so that a size of the housing 400 in the radial direction R of the drive motor 200 is small, thereby helping reduce the size of the powertrain 20. The first accommodation part 430, the motor control unit container 420, and the second accommodation part 440 are arranged around the outer side of the circumferential wall 411 of the motor container 410 in the circumferential direction C of the drive motor 200. This further helps both the first accommodation part 430 and the second accommodation part 440 support the bottom wall 421 of the motor control unit container 420, so that overall structural strength of the housing 400 can be improved, thereby helping improve stability and reliability of the powertrain 20 and improve NVH performance of the powertrain 20.

In this embodiment of this application, the motor control unit container 420 is stacked on the outer side of the circumferential wall 411 of the motor container 410 in the radial direction R of the drive motor 200, to make the bottom wall 421 of the motor control unit container 420 enclose the circumferential wall 411 of the motor container 410 to form the first accommodation part 430 and the second accommodation part 440. The direct current filter component 120 and the alternating current filter component 130 of the motor control unit 100 are respectively arranged in the first accommodation part 430 and the second accommodation part 440, so that the electrical components of the motor control unit 100 can be separately arranged in the first accommodation part 430, the motor control unit container 420, and the second accommodation part 440, which helps improve the NVH performance of the powertrain 20. Then, the first accommodation part 430, the motor control unit container 420, and the second accommodation part 440 are arranged around the outer side of the circumferential wall 411 of the motor container 410 in the circumferential direction C of the drive motor 200, so that the formation of the first accommodation part 430 and the second accommodation part 440 can make full use of the space between the motor container 410 and the motor control unit container 420, and the housing 400 has a small size, which facilitates the miniaturization of the powertrain 20. In addition, the first accommodation part 430 and the second accommodation part 440 can provide support for the motor control unit container 420, making the structural strength of the housing 400 stronger.

In an embodiment, the motor container 410, the motor control unit container 420, the first accommodation part 430, and the second accommodation part 440 are integrated through injection molding, to improve the structural strength of the housing 400.

In an embodiment, a reducer of the powertrain 20 is the planetary reducer 300. In comparison with a parallel shaft reducer, radial lengths of the planetary reducer 300 at various angles in a circumferential direction do not differ greatly. The planetary reducer 300 is roughly in a circular shape, and a length of the planetary reducer 300 in the radial direction R of the powertrain 20 is less than that of the parallel shaft reducer. The first accommodation part 430, the motor control unit container 420, and the second accommodation part 440 are arranged in the circumferential direction C of the drive motor 200, so that the first accommodation part 430, the motor control unit container 420, and the second accommodation part 440 occupy a small length of the powertrain 20 in the radial direction R, and therefore, the length of the powertrain 20 in the radial direction of the powertrain 20 is small, which facilitates the miniaturization of the powertrain 20.

In an embodiment, as shown in FIG. 7 and FIG. 8, orientations of an opening 431 of the first accommodation part 430 and an opening 441 of the second accommodation part 440 intersect with an orientation of an opening 422 of the motor control unit container 420, and the orientation of the opening 431 of the first accommodation part 430 is opposite to the orientation of the opening 441 of the second accommodation part 440.

In this embodiment of this application, the orientations of the opening 431 of the first accommodation part 430 and the opening 441 of the second accommodation part 440 intersect with the orientation of the opening 422 of the motor control unit container 420, which further helps allow for a larger volume without additionally increasing the size of the housing 400 in the radial direction after the first accommodation part 430, the motor control unit container 420, and the second accommodation part 440 are arranged around the outer side of the circumferential wall 411 of the motor container 410 in the circumferential direction C of the drive motor 200, and therefore, as shown in FIG. 3 and FIG. 6, the first accommodation part 430 has a sufficient space to accommodate the direct current filter component 120, and the second accommodation part 440 has a sufficient space to accommodate the alternating current filter component 130.

In this embodiment of this application, as shown in FIG. 7 and FIG. 8, the orientation of the opening 431 of the first accommodation part 430 is opposite to the orientation of the opening 441 of the second accommodation part 440, so that the first accommodation part 430 and the second accommodation part 440 can make full use of two triangular spaces formed by the bottom wall 421 of the motor control unit container 420 and the outer side of the circumferential wall 411 of the motor container 410, and therefore, the first accommodation part 430 and the second accommodation part 440 do not occupy an excessive space of the motor control unit container 420 in a direction perpendicular to the axial direction O of the drive motor 200. This further helps reduce the size of the housing 400, to obtain the powertrain 20 with a smaller size.

In an embodiment, the first accommodation part 430 and the second accommodation part 440 are enveloped on the bottom wall 421 of the motor control unit container 420 in an arrangement direction of the first accommodation part 430 and the second accommodation part 440, so that the first accommodation part 430 and the second accommodation part 440 do not extend beyond the bottom wall 421 of the motor control unit container 420, thereby reducing the size of the powertrain 20.

In an embodiment, as shown in FIG. 7, a part of the circumferential wall 412 of the motor container 410 and a part of the bottom wall 423 of the motor control unit container 420 are spaced apart, the part of the circumferential wall 412 of the motor container 410 is configured to form a bottom wall 432 of the first accommodation part 430, and the part of the bottom wall 423 of the motor control unit container 420 is configured to form a first circumferential side wall 433 of the first accommodation part 430.

In this embodiment of this application, the part of the circumferential wall 412 of the motor container 410 and the part of the bottom wall 423 of the motor control unit container 420 are spaced apart, so that the first accommodation part 430 can be formed by using a space between the part of the circumferential wall 412 of the motor container 410 and the part of the bottom wall 423 of the motor control unit container 420 without occupying additional spaces of the motor control unit container 420 and the motor container 410 in the axial direction O of the drive motor 200 and the radial direction R of the drive motor 200, and therefore, the size of the housing 400 is small.

In this embodiment of this application, as shown in FIG. 6 and FIG. 7, the part of the circumferential wall 412 of the motor container 410 is configured to form the bottom wall 432 of the first accommodation part 430, and the part of the bottom wall 423 of the motor control unit container 420 is configured to form the first circumferential side wall 433 of the first accommodation part 430, so that the bottom wall 432 and the first circumferential side wall 433 of the first accommodation part 430 can be formed by directly reusing the part of the circumferential wall 412 of the motor container 410 and the part of the bottom wall 423 of the motor control unit container 420, and therefore, structural integration between the first accommodation part 430, the motor control unit container 420, and the motor container 410 is higher. This facilitates higher integration of the housing 400, and also helps make a structure of the powertrain 20 more compact, thereby helping reduce the size of the powertrain 20 and improve the structural strength of the housing 400.

In this embodiment of this application, the part of the bottom wall 423 of the motor control unit container 420 is configured to form the first circumferential side wall 433 of the first accommodation part 430, so that the first accommodation part 430 can further provide support for the motor control unit container 420. This helps reduce a shake mode of the motor control unit 100 and improve the NVH performance of the powertrain 20.

In an embodiment, as shown in FIG. 5 to FIG. 7, the first circumferential side wall 433 includes a high-voltage terminal mounting hole 4331, the first accommodation part 430 and the motor control unit container 420 communicate through the high-voltage terminal mounting hole 4331, the high-voltage terminal mounting hole 4331 is used for a high-voltage terminal wiring component 481 to pass through, and the high-voltage terminal wiring component 481 is configured to transmit the direct current obtained through filtering by the direct current filter component 120 to the power module 110.

In this embodiment of this application, the first circumferential side wall 433 includes the high-voltage terminal mounting hole 4331, the first accommodation part 430 and the motor control unit container 420 communicate through the high-voltage terminal mounting hole 4331, and the high-voltage terminal mounting hole 4331 is used for the high-voltage terminal wiring component 481 to pass through. The first accommodation part 430 is configured to accommodate the direct current filter component 120, the motor control unit container 420 is configured to accommodate the power module 110 of the motor control unit 100, and the part of the bottom wall 423 of the motor control unit container 420 is configured to form the first circumferential side wall 433 of the first accommodation part 430. The high-voltage terminal mounting hole 4331 and the high-voltage terminal wiring component 481 are arranged on the first circumferential side wall 433 shared by the first accommodation part 430 and the motor control unit container 420, so that the direct current obtained through filtering by the direct current filter component 120 can be quickly transmitted to the power module 110 through a short path. This helps reduce a power loss, and further helps simplify cable arrangement.

In an embodiment, as shown in FIG. 7, the housing 400 includes a first protrusion 450, the first protrusion 450 protrudes from an outer circumferential wall of the motor container 410, the first protrusion 450 is arranged opposite to the part of the bottom wall 423 of the motor control unit container 420 in the circumferential direction C of the drive motor 200, and the first protrusion 450 is configured to form a second circumferential side wall 434 of the first accommodation part 430.

In this embodiment of this application, the first protrusion 450 protrudes from the outer circumferential wall of the motor container 410, the first protrusion 450 is arranged opposite to the part of the bottom wall 423 of the motor control unit container 420 in the circumferential direction C of the drive motor 200, and the first protrusion 450 is configured to form the second circumferential side wall 434 of the first accommodation part 430. The first protrusion 450 is formed by using the outer circumferential wall of the motor container 410, to form the second circumferential side wall 434, so that the first accommodation part 430 does not occupy an excessive space of the housing 400, thereby helping reduce the size of the housing 400.

In this embodiment of this application, the first protrusion 450 protrudes from the outer circumferential wall of the motor container 410, so that structural stability of the housing 400 and the powertrain 20 can be further enhanced, thereby helping improve the NVH performance of the powertrain 20.

In an embodiment, as shown in FIG. 6 and FIG. 7, the second circumferential side wall 434 includes a direct current mounting hole 4341, and the direct current mounting hole 4341 is used for a high-voltage connector 483 to pass through. As shown in FIG. 5 and FIG. 6, the high-voltage connector 483 is configured to connect the power module 110 to the power battery 30, and the direct current filter component 120 is configured to perform filtering on a direct current transmitted by the high-voltage connector 483.

In this embodiment of this application, the second circumferential side wall 434 includes the direct current mounting hole 4341, the direct current mounting hole 4341 is used for the high-voltage connector 483 to pass through, the high-voltage connector 483 is configured to connect the power module 110 to the power battery 30, the direct current filter component 120 is configured to perform filtering on the direct current transmitted by the high-voltage connector 483, and the second circumferential side wall 434 is arranged opposite to the first circumferential side wall 433 in the circumferential direction C of the drive motor 200, so that the high-voltage direct current that is output by the power battery 30 can be transmitted to the power module 110 through the high-voltage connector 483, the direct current filter component 120, and the high-voltage terminal wiring component 481 in the circumferential direction C of the drive motor 200, and the direct current can be transmitted more smoothly through a shorter path. In addition, a structure of the powertrain 20 is arranged more compactly in the circumferential direction C of the drive motor 200, and further, arrangement of the high-voltage connector 483 does not occupy an additional space of the housing 400 in the axial direction O of the drive motor 200. This helps the powertrain 20 have a small size.

In this embodiment of this application, as shown in FIG. 6, the high-voltage connector 483 is arranged on the second circumferential side wall 434, the high-voltage terminal wiring component 481 is arranged on the first circumferential side wall 433, and the second circumferential side wall 434 is arranged opposite to the first circumferential side wall 433, so that the high-voltage connector 483 is arranged opposite to the high-voltage terminal wiring component 481, thereby reducing interference between the high-voltage connector 483 and the high-voltage terminal wiring component 481, and improving EMC performance of the powertrain 20.

In an embodiment, as shown in FIG. 5 to FIG. 7, the first accommodation part 430 is further configured to accommodate a central control board 140, the first circumferential side wall 433 includes a board connection hole 4332, the motor control unit container 420 and the first accommodation part 430 communicate through the board connection hole 4332, the board connection hole 4332 is used for a board connector 482 to pass through, and the board connector 482 is configured to connect the central control board 140 to a circuit board 150 of the motor control unit 100.

In this embodiment of this application, the first accommodation part 430 is further configured to accommodate the central control board 140. The first accommodation part 430 is reused to accommodate the central control board 140, so that components are arranged compactly. In addition, the central control board 140 in the first accommodation part 430 can be electrically isolated from the circuit board 150 and the power module 110 in the motor control unit container 420. This helps improve the EMC performance of the powertrain 20.

In this embodiment of this application, the part of the bottom wall 423 of the motor control unit container 420 is configured to form the first circumferential side wall 433 of the first accommodation part 430, the first circumferential side wall 433 includes the board connection hole 4332, the motor control unit container 420 and the first accommodation part 430 communicate through the board connection hole 4332, the board connection hole 4332 is used for the board connector 482 to pass through, the board connector 482 is configured to connect the central control board 140 to the circuit board 150 of the motor control unit 100, the central control board 140 is accommodated in the first accommodation part 430, and the circuit board 150 is accommodated in the motor control unit container 420, so that the central control board 140 can smoothly transmit a signal to the circuit board 150 of the motor control unit 100 through the board connector 482 in the circumferential direction C of the drive motor 200, and further regulate a running status of the drive motor 200 through the circuit board 150.

In this embodiment of this application, the board connection hole 4332 and the board connector 482 are arranged on the first circumferential side wall 433 shared by the first accommodation part 430 and the motor control unit container 420, so that a connection path between the central control board 140 and the circuit board 150 of the motor control unit 100 can be shorter, thereby simplifying the cable arrangement.

In an embodiment, the powertrain 20 includes two drive motors 200, and one central control board 140 may be used to separately control running statuses of the two drive motors 200 through one or two circuit boards 150 of the motor control unit 100, so that motion statuses of wheels of the vehicle can be regulated.

In an embodiment, the central control board 140 is further configured to control a door system of the vehicle, and is configured to: monitor a status (for example, open, closed, or locked) of a vehicle door, and control an action, for example, unlocking, locking, opening, or closing, of the vehicle door. In an embodiment, the central control board 140 may further manage a function related to the vehicle door, for example, a vehicle window, a rear-view mirror, or a sunroof. In this embodiment of this application, the first accommodation part 430 is reused to accommodate the central control board 140 that has a plurality of control functions, so that the size of the powertrain 20 is small while the powertrain 20 implements control of a plurality of functions.

In an embodiment, as shown in FIG. 6 and FIG. 7, the housing 400 further includes a shielding wall 460, the shielding wall 460 protrudes from an outer side wall of the motor container 410, the shielding wall 460 is configured to divide the first accommodation part 430 into a board container 435 and a direct current filter component container 436, the board container 435 is configured to accommodate the central control board 140, and the direct current filter component container 436 is configured to accommodate the direct current filter component 120.

In this embodiment of this application, the housing 400 further includes the shielding wall 460, the shielding wall 460 protrudes from the outer side wall of the motor container 410, and the shielding wall 460 may enhance structural strength of the first accommodation part 430.

In this embodiment of this application, the shielding wall 460 is configured to divide the first accommodation part 430 into the board container 435 and a direct current filter component container 436, the board container 435 is configured to accommodate the central control board 140, and the direct current filter component container 436 is configured to accommodate the direct current filter component 120, so that the shielding wall 460 can electrically isolate the central control board 140 from the direct current filter component 120, thereby improving the EMC performance of the powertrain 20.

In an embodiment, as shown in FIG. 6, the direct current filter component container 436 is further configured to accommodate a direct current breaker 484. When the powertrain 20 is faulty in one of different arrangement states in the vehicle, the direct current breaker 484 may disconnect a direct current circuit, to avoid burning. This helps improve safety of the powertrain 20.

In an embodiment, as shown in FIG. 6 and FIG. 7, the second circumferential side wall 434 further includes a signal mounting hole 4342, and the signal mounting hole 4342 is configured to fasten a signal connector 486 for transmitting a signal to the central control board 140.

In this embodiment of this application, as shown in FIG. 5 to FIG. 7, the second circumferential side wall 434 further includes the signal mounting hole 4342, and the signal mounting hole 4342 is configured to fasten the signal connector 486 for transmitting the signal to the central control board 140, so that the signal connector 486 can transmit the signal to the central control board 140 in the first accommodation part 430, and therefore, the central control board 140 can transmit the signal to the circuit board 150 of the motor control unit 100.

In an embodiment, as shown in FIG. 6 and FIG. 7, the housing 400 further includes a first shielding wall 461, the first shielding wall 461 protrudes from the outer side wall of the motor container 410, and the first shielding wall 461 is distributed on the bottom wall 432 of the first accommodation part 430. The signal mounting hole 4342 and the board connection hole 4332 are arranged on two sides of the first shielding wall 461 in the axial direction O of the drive motor 200.

In this embodiment of this application, the housing 400 further includes the first shielding wall 461, the first shielding wall 461 protrudes from the outer side wall of the motor container 410, and the first shielding wall 461 is distributed on the bottom wall 432 of the first accommodation part 430. The first shielding wall 461 may enhance the structural strength of the first accommodation part 430.

In this embodiment of this application, the signal mounting hole 4342 and the board connection hole 4332 are arranged on the two sides of the first shielding wall 461 in the axial direction O of the drive motor 200, so that the first shielding wall 461 can electrically isolate the board connector 482 mounted in the board connection hole 4332 from the signal connector 486 mounted in the signal mounting hole 4342, thereby improving the EMC performance.

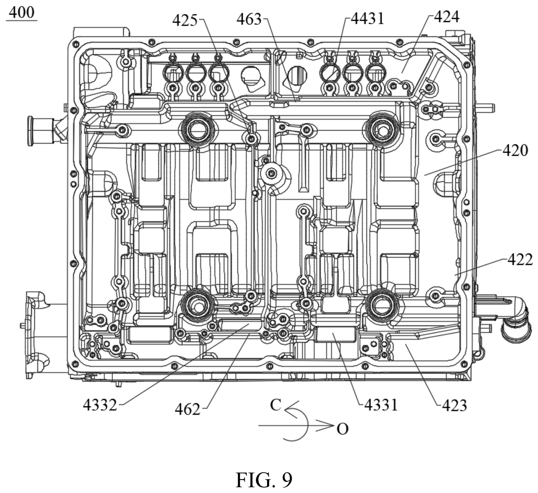

FIG. 9 is another diagram of a housing 400 according to an embodiment of this application.

In an embodiment, as shown in FIG. 6 and FIG. 9, the housing 400 further includes a second shielding wall 462, and the second shielding wall 462 protrudes from the part of the bottom wall 423 of the motor control unit container 420 to the opening 422 of the motor control unit container 420. The board connection hole 4332 and the high-voltage terminal mounting hole 4331 are arranged on two sides of the second shielding wall 462 in the circumferential direction C of the drive motor 200.

In this embodiment of this application, the board connection hole 4332 and the high-voltage terminal mounting hole 4331 are arranged on the two sides of the second shielding wall 462 in the circumferential direction C of the drive motor 200, so that the second shielding wall 462 can electrically isolate the board connector 482 from the high-voltage terminal wiring component 481, thereby preventing a high-voltage direct current transmitted by the high-voltage terminal wiring component 481 from interfering with an electrical signal of the central control board 140. This helps improve the EMC performance of the powertrain 20.

In an embodiment, as shown in FIG. 5, FIG. 6, and FIG. 9, the motor control unit container 420 is further configured to accommodate a direct current transfer copper busbar 487, the direct current transfer copper busbar 487 is configured to connect to the high-voltage terminal wiring component 481, and the direct current transfer copper busbar 487 is configured to connect to a bus capacitor 180 of the motor control unit 100, so that the direct current that is output by the power battery 30 can be transmitted to the bus capacitor 180 of the motor control unit 100. The board connection hole 4332 and the direct current transfer copper busbar 487 are arranged on the two sides of the second shielding wall 462 in the circumferential direction C of the drive motor 200, and the board connection hole 4332 is configured to fasten the board connector 482, so that the electrical signal transmitted by the central control board 140 is not affected by EMC interference of the direct current transfer copper busbar 487. This helps improve electromagnetic compatibility of the powertrain 20.

In an embodiment, the bus capacitor 180, the power module 110, and the circuit board 150 of the motor control unit 100 are stacked, to reduce a space occupied by the motor control unit 100 and reduce the size of the powertrain 20.

In an embodiment, as shown in FIG. 6, the first accommodation part 430 is further configured to fasten a shielding cover 488, and the shielding cover 488 is configured to cover the signal connector 486, to reduce interference of the signal connector 486 from another power flow or signal.

In an embodiment, as shown in FIG. 8, another part of the circumferential wall 413 of the motor container 410 and another part of the bottom wall 424 of the motor control unit container 420 are spaced apart, the another part of the circumferential wall 413 of the motor container 410 is configured to form a bottom wall 442 of the second accommodation part 440, and the another part of the bottom wall 424 of the motor control unit container 420 is configured to form a third circumferential side wall 443 of the second accommodation part 440.

In this embodiment of this application, the another part of the circumferential wall 413 of the motor container 410 and the another part of the bottom wall 424 of the motor control unit container 420 are spaced apart, so that the second accommodation part 440 can be formed by using the another part of the circumferential wall 413 of the motor container 410 and the another part of the bottom wall 424 of the motor control unit container 420 without occupying additional spaces of the motor control unit container 420 and the motor container 410 in the axial direction O of the drive motor 200 and the direction perpendicular to the axial direction O of the drive motor 200, and the size of the housing 400 can be small, thereby helping reduce the size of the powertrain 20.

In this embodiment of this application, the another part of the circumferential wall 413 of the motor container 410 is configured to form the bottom wall 442 of the second accommodation part 440, and the another part of the bottom wall 424 of the motor control unit container 420 is configured to form the third circumferential side wall 443 of the second accommodation part 440, so that the bottom wall 442 and the third circumferential side wall 443 of the second accommodation part 440 can be formed by directly reusing the another part of the circumferential wall 413 of the motor container 410 and the another part of the bottom wall 424 of the motor control unit container 420, and therefore, structural integration between the motor control unit container 420, the motor container 410, and the second accommodation part 440 is higher. This facilitates higher integration of the housing 400, and also helps make the structure of the powertrain 20 more compact, thereby helping reduce the size of the powertrain 20.

In this embodiment of this application, the another part of the bottom wall 424 of the motor control unit container 420 is configured to form the third circumferential side wall 443 of the second accommodation part 440, so that the second accommodation part 440 can provide support for the motor control unit container 420. This helps reduce the shake mode of the motor control unit 100 and improve the NVH performance of the powertrain 20.

In an embodiment, as shown in FIG. 8, the third circumferential side wall 443 includes a three-phase hole 4431, and the second accommodation part 440 and the motor control unit container 420 communicate through the three-phase hole 4431. As shown in FIG. 3 to FIG. 5, the three-phase hole 4431 is used for a three-phase copper busbar 160 to pass through, and the three-phase copper busbar 160 is configured to connect the power module 110 of the motor control unit 100 to the stator winding 221.

In this embodiment of this application, the third circumferential side wall 443 includes the three-phase hole 4431, the second accommodation part 440 and the motor control unit container 420 communicate through the three-phase hole 4431, the three-phase hole 4431 is used for the three-phase copper busbar 160 to pass through, the motor control unit container 420 is configured to accommodate the power module 110 of the motor control unit 100, the second accommodation part 440 is configured to accommodate the alternating current filter component 130, and the alternating current filter component 130 of the motor control unit 100 is configured to: perform filtering on the alternating current, and then transmit the filtered alternating current to the stator winding 221 of the drive motor 200, so that the three-phase copper busbar 160 can be connected to the alternating current filter component 130 in the second accommodation part 440 through a shorter path, and therefore, a connection path between the three-phase copper busbar 160 and the stator winding 221 is shorter, and wiring layout is compact, thereby improving structural compactness of the powertrain 20.

In this embodiment of this application, the three-phase copper busbar 160 is configured to connect the power module 110 of motor control unit 100 to the stator winding 221, and the three-phase copper busbar 160 may transmit, to the stator winding 221, the alternating current that is output by the power module 110, so that the drive motor 200 runs.

In an embodiment, as shown in FIG. 9, the housing 400 further includes a third shielding wall 463. The third shielding wall 463 protrudes from the another part of the bottom wall 424 of the motor control unit container 420 to the opening 422 of the motor control unit container 420, the another part of the bottom wall 424 of the motor control unit container 420 includes a fastening hole 425 and the three-phase hole 4431, the fastening hole 425 is configured to fasten the power module 110, and the three-phase hole 4431 and the fastening hole 425 are arranged on two sides of the third shielding wall 463 in an arrangement direction of the part of the bottom wall 423 of the motor control unit container 420 and the another part of the bottom wall 424 of the motor control unit container 420.

In this embodiment of this application, as shown in FIG. 5 and FIG. 9, the three-phase hole 4431 and the fastening hole 425 are arranged on the two sides of the third shielding wall 463 in the arrangement direction of the part of the bottom wall 423 of the motor control unit container 420 and the another part of the bottom wall 424 of the motor control unit container 420, so that the three-phase copper busbar 160 fastened by the three-phase hole 4431 is electrically isolated from the power module 110 fastened by the fastening hole 425. This helps avoid EMC interference between the three-phase copper busbar 160 and the power module 110.

In an embodiment, as shown in FIG. 3, FIG. 5, and FIG. 8, the third circumferential side wall 443 further includes a signal hole 4432, the second accommodation part 440 and the motor control unit container 420 communicate through the signal hole 4432, the signal hole 4432 is used for a signal cable 170 to pass through, and the signal cable 170 is configured to connect the circuit board 150 of the motor control unit 100 to a resolver (not shown in the figure).

In this embodiment of this application, the third circumferential side wall 443 further includes the signal hole 4432, the second accommodation part 440 and the motor control unit container 420 communicate through the signal hole 4432, and the signal hole 4432 is used for the signal cable 170 to pass through, so that both the signal cable 170 and the three-phase copper busbar 160 can be arranged on the third circumferential side wall 443, and therefore, wiring of the powertrain 20 is compact. This helps improve integration of the powertrain 20 and reduce the size of the powertrain 20.

In this embodiment of this application, as shown in FIG. 4 and FIG. 5, the signal cable 170 is configured to connect the circuit board 150 of the motor control unit 100 to the resolver, and the resolver may be configured to detect rotational speed information of the rotor 230 of the drive motor 200, so that the rotational speed information of the rotor 230 can be transmitted to the circuit board 150 of the motor control unit 100 through the signal cable 170, and therefore, a rotation status of the rotor 230 of the drive motor 200 can be adjusted and controlled through the circuit board 150.

In an embodiment, as shown in FIG. 8, the housing 400 further includes a second protrusion 470, the second protrusion 470 protrudes from the outer side wall of the motor container 410, the second protrusion 470 includes a first segment 471, a second segment 472, and a third segment 473 that are sequentially connected, the first segment 471 is opposite to the third segment 473 in the axial direction O of the drive motor 200, the second segment 472 is opposite to the another part of the bottom wall 424 of the motor control unit container 420 in the circumferential direction C of the drive motor 200, the second segment 472 is configured to form a fourth circumferential side wall 444 of the second accommodation part 440, and the first segment 471 and the third segment 473 respectively form a third axial side wall 445 and a fourth axial side wall 446 of the second accommodation part 440.

In this embodiment of this application, the housing 400 further includes the second protrusion 470, the second protrusion 470 protrudes from the outer side wall of the motor container 410, and the second protrusion 470 is formed by using the outer side wall of the motor container 410. This helps prevent the second protrusion 470 from occupying excessive spaces of the motor container 410 and the motor control unit container 420 in the direction perpendicular to the axial direction O of the drive motor 200, and helps reduce the size of the housing 400, thereby helping reduce the size of the powertrain 20. The second protrusion 470 may further enhance the structural strength of the housing 400.

In this embodiment of this application, the third circumferential side wall 443 and the first segment 471, the second segment 472, and the third segment 473 of the second protrusion 470 jointly form a circumferential wall of the second accommodation part 440, so that structural strength of the second accommodation part 440 is stronger, and the structural strength of the housing 400 is also stronger. This helps improve the NVH performance of the powertrain 20.

In an embodiment, as shown in FIG. 4 and FIG. 8, the third axial side wall 445 is closer to an opening 414 of the motor container 410 than the fourth axial side wall 446, the third axial side wall 445 includes a cable outlet 4451, the cable outlet 4451 runs through the third axial side wall 445 in the axial direction O of the drive motor 200, and the cable outlet 4451 is configured to accommodate the power module 110 and a three-phase connection component 2210 of the stator winding 221 of the drive motor 200.

In this embodiment of this application, the third axial side wall 445 is closer to the opening 414 of the motor container 410 than the fourth axial side wall 446, the stator winding 221 is arranged in the motor container 410, the third axial side wall 445 includes the cable outlet 4451, the cable outlet 4451 runs through the third axial side wall 445 in the axial direction O of the drive motor 200, and the cable outlet 4451 is configured to accommodate the power module 110 and the three-phase connection component 2210 of the stator winding 221 of the drive motor 200, so that an electrical connection path between the power module 110 and the stator winding 221 is shorter, and therefore, wiring layout of the three-phase connection component 2210 and the alternating current filter component 130 is more compact. This helps reduce the size of the powertrain 20.

In an embodiment, as shown in FIG. 3 to FIG. 5, the second accommodation part 440 is further configured to accommodate an alternating current filter magnetic ring 131, and a part that is of the three-phase copper busbar 160 and that extends into the second accommodation part 440 is further configured to pass through the alternating current filter magnetic ring 131, so that filtering can be performed, through the alternating current filter magnetic ring 131, on a three-phase alternating current received by the three-phase copper busbar 160 from the power module 110. This helps transmit the more stable three-phase alternating current to the stator winding 221, to drive the rotor 230 to rotate.

In an embodiment, as shown in FIG. 8, the second accommodation part 440 is further configured to communicate with the motor container 410 to receive oil in the motor container 410. The housing 400 further includes an oil return hole 401, and the second accommodation part 440 and the motor container 410 communicate through the oil return hole 401.

In this embodiment of this application, as shown in FIG. 3 and FIG. 8, the second accommodation part 440 is further configured to communicate with the motor container 410 to receive the oil in the motor container 410, and the second accommodation part 440 is reused as an oil bottom housing, so that there is no need to additionally dispose an oil bottom housing for oil storage. This helps the powertrain 20 have a compact and small structure. When the second accommodation part 440 is used as the oil bottom housing to accommodate the oil, the alternating current filter component 130 fastened in the second accommodation part 440 may be soaked by the oil, which facilitates heat dissipation of the alternating current filter component 130. In addition, a radiation noise of a cover plate of the second accommodation part 440 may be reduced based on an adhesiveness feature of the oil, so that the NVH performance of the powertrain 20 is improved.

In this embodiment of this application, the housing 400 further includes the oil return hole 401, and the second accommodation part 440 and the motor container 410 communicate through the oil return hole 401, so that the oil in the motor container 410 can quickly return to the second accommodation part 440 through the oil return hole 401. This helps accelerate circulation of the oil and improve cooling and lubrication efficiency of the powertrain 20.

In an embodiment, as shown in FIG. 8, the housing 400 includes two motor containers 410, orientations of openings 414 of the two motor containers 410 are opposite to each other in the axial direction O of the drive motor 200, and the motor control unit container 420 is stacked on outer sides of circumferential walls 411 of the two motor containers 410 in the radial direction R of the drive motor 200. As shown in FIG. 4 to FIG. 6, the motor control unit container 420 is configured to accommodate two power modules 110 of the motor control unit 100, the two power modules 110 are configured to electrically connect to the direct current filter component 120 to receive a direct current, and each power module 110 is configured to transmit a three-phase alternating current to the stator 220 of the drive motor 200 in the two motor containers 410.

In this embodiment of this application, the orientations of the openings 414 of the two motor containers 410 are opposite to each other in the axial direction O of the drive motor 200, which helps the stator 220 and the rotor 230 of the drive motor 200 be respectively mounted in the housing 400 of the powertrain 20 from directions of the openings 414 of the two motor containers 410 in the axial direction O of the drive motor 200.

In this embodiment of this application, the motor control unit container 420 is stacked on the outer sides of the circumferential walls 411 of the two motor containers 410 in the radial direction R of the drive motor 200. This helps form the first accommodation part 430 and the second accommodation part 440 with large sizes, so that a large quantity of electrical components of the motor control unit 100 can be arranged in the first accommodation part 430 and the second accommodation part 440.

In this embodiment of this application, the motor control unit container 420 is configured to accommodate two power modules 110 of the motor control unit 100. The two power modules 110 are configured to electrically connect to the direct current filter component 120 to receive a direct current. Each power module 110 is configured to transmit a three-phase alternating current to the stator 220 of the drive motor 200 in the two motor containers 410, so that one direct current filter component 120 in the first accommodation part 430 can be used to simultaneously perform filtering on direct currents that are input to the two power modules 110. This helps improve the integration of the powertrain 20, and further helps reduce use of electrical components, thereby facilitating the miniaturization of the powertrain 20.

In an embodiment, as shown in FIG. 4, when the second accommodation part 440 is formed by the circumferential walls 411 of the two motor containers 410, a third axial side wall 445 and a fourth axial side wall 446 of the second accommodation part 440 each include a cable outlet 4451, and the cable outlet 4451 is configured to accommodate the power module 110 and the three-phase connection component 2210 of the stator winding 221 of the drive motor 200.

The foregoing describes in detail the powertrain and the electric vehicle provided in embodiments of this application. The principles and embodiments in this application are described in this specification by using specific examples. The foregoing descriptions about embodiments are merely provided to help understand the method and core ideas of the method in this application. In addition, a person of ordinary skill in the art can make variations and modifications in terms of the specific embodiments and application scopes based on the ideas in this application. In conclusion, the content of this specification shall not be construed as a limitation on this application.

## Claims

1. A powertrain, wherein a housing of the powertrain comprises a motor container and a motor control unit container, the motor container is configured to: fasten a stator of a drive motor and accommodate a rotor of the drive motor, the motor control unit container is configured to accommodate a power module of a motor control unit, the power module is configured to convert a direct current obtained through filtering by a direct current filter component of the motor control unit into an alternating current, and an alternating current filter component of the motor control unit is configured to: perform filtering on the alternating current, and then transmit a filtered alternating current to a stator winding of the drive motor; and
the motor control unit container is stacked on an outer side of a circumferential wall of the motor container in a radial direction of the drive motor, a bottom wall of the motor control unit container is configured to enclose the circumferential wall of the motor container to form a first accommodation part and a second accommodation part, the first accommodation part is configured to accommodate the direct current filter component, the second accommodation part is configured to accommodate the alternating current filter component, and the first accommodation part, the motor control unit container, and the second accommodation part are arranged around the outer side of the circumferential wall of the motor container in a circumferential direction of the drive motor.

2. The powertrain according to claim 1, wherein orientations of an opening of the first accommodation part and an opening of the second accommodation part intersect with an orientation of an opening of the motor control unit container, and the orientation of the opening of the first accommodation part is opposite to the orientation of the opening of the second accommodation part.

3. The powertrain according to claim 1 or 2, wherein a part of the circumferential wall of the motor container and a part of the bottom wall of the motor control unit container are spaced apart, the part of the circumferential wall of the motor container is configured to form a bottom wall of the first accommodation part, and the part of the bottom wall of the motor control unit container is configured to form a first circumferential side wall of the first accommodation part.

4. The powertrain according to claim 3, wherein the first circumferential side wall comprises a high-voltage terminal mounting hole, the first accommodation part and the motor control unit container communicate through the high-voltage terminal mounting hole, the high-voltage terminal mounting hole is used for a high-voltage terminal wiring component to pass through, and the high-voltage terminal wiring component is configured to transmit the direct current through filtering by the direct current filter component to the power module.

5. The powertrain according to claim 3, wherein the housing comprises a first protrusion, the first protrusion protrudes from an outer circumferential wall of the motor container, the first protrusion is arranged opposite to the part of the bottom wall of the motor control unit container in the circumferential direction of the drive motor, and the first protrusion is configured to form a second circumferential side wall of the first accommodation part.

6. The powertrain according to claim 5, wherein the second circumferential side wall comprises a direct current mounting hole, the direct current mounting hole is used for a high-voltage connector to pass through, the high-voltage connector is configured to connect the power module to a power battery, and the direct current filter component is configured to perform filtering on a direct current transmitted by the high-voltage connector.

7. The powertrain according to any one of claims 3 to 6, wherein the first accommodation part is further configured to accommodate a central control board, the first circumferential side wall comprises a board connection hole, the motor control unit container and the first accommodation part communicate through the board connection hole, the board connection hole is used for a board connector to pass through, and the board connector is configured to connect the central control board to a circuit board of the motor control unit.

8. The powertrain according to claim 7, wherein the housing further comprises a shielding wall, the shielding wall protrudes from an outer side wall of the motor container, the shielding wall is configured to divide the first accommodation part into a board container and a direct current filter component container, the board container is configured to accommodate the central control board, and the direct current filter component container is configured to accommodate the direct current filter component.

9. The powertrain according to any one of claims 1 to 8, wherein another part of the circumferential wall of the motor container and another part of the bottom wall of the motor control unit container are spaced apart, the another part of the circumferential wall of the motor container is configured to form a bottom wall of the second accommodation part, and the another part of the bottom wall of the motor control unit container is configured to form a third circumferential side wall of the second accommodation part.

10. The powertrain according to claim 9, wherein the third circumferential side wall comprises a three-phase hole, the second accommodation part and the motor control unit container communicate through the three-phase hole, the three-phase hole is used for a three-phase copper busbar to pass through, and the three-phase copper busbar is configured to connect the power module of the motor control unit to the stator winding.

11. The powertrain according to claim 9, wherein the housing further comprises a second protrusion, the second protrusion protrudes from the outer side wall of the motor container, the second protrusion comprises a first segment, a second segment, and a third segment that are sequentially connected, the first segment is opposite to the third segment in an axial direction of the drive motor, the second segment is opposite to the another part of the bottom wall of the motor control unit container in the circumferential direction of the drive motor, the second segment is configured to form a fourth circumferential side wall of the second accommodation part, and the first segment and the third segment respectively form a third axial side wall and a fourth axial side wall of the second accommodation part.

12. The powertrain according to claim 11, wherein the third axial side wall is closer to an opening of the motor container than the fourth axial side wall, the third axial side wall comprises a cable outlet, the cable outlet runs through the third axial side wall in the axial direction of the drive motor, and the cable outlet is configured to accommodate the power module and a three-phase connection component of the stator winding of the drive motor.

13. The powertrain according to any one of claims 9 to 12, wherein the second accommodation part is further configured to communicate with the motor container to receive oil in the motor container, the housing further comprises an oil return hole, and the second accommodation part and the motor container communicate through the oil return hole.

14. The powertrain according to any one of claims 1 to 13, wherein the housing comprises two motor containers, orientations of openings of the two motor containers are opposite to each other in the axial direction of the drive motor, the motor control unit container is stacked on outer sides of circumferential walls of the two motor containers in the radial direction of the drive motor, the motor control unit container is configured to accommodate two power modules of the motor control unit, the two power modules are configured to electrically connect to the direct current filter component to receive a direct current, and each power module is configured to transmit a three-phase alternating current to the stator of the drive motor in the two motor containers.

15. An electric vehicle, wherein the electric vehicle comprises a vehicle frame and the powertrain according to any one of claims 1 to 14, the vehicle frame is configured to fasten the powertrain, the motor control unit is configured to receive power supplied by a power battery, and the drive motor is configured to receive power supplied by the motor control unit to drive a wheel.
